# EUROPEAN PATENT APPLICATION

(11) **EP 1 369 564 A1**
(43) Date of publication of application: **10.12.2003**
(21) Application number: 02012735.3
(22) Date of filing: 07.06.2002
(51) Int. Cl.: F02D 11/10, F16H 55/17, F16H 27/08

(54) **Angular motion driving mechanism and gear wheel for use in such mechanism**

(71) Applicant: SIEMENS AKTIENGESELLSCHAFT, 80333 München (DE)
(72) Inventor: Linke, Tobias, 61118 Bad Vilbel (DE); Sauerschell, Wolfgang, 61440 Oberursel (DE); Welteroth, Peter, 53783 Eitorf (DE)

(57) **Abstract**

Angular motion driving mechanism comprising, mounted on a supporting structure (SUP), a gear wheel (GW) for intermittent rotational movement in clockwise and counterclockwise directions within an arc bounded by first and second angular positions (α1 and α2, respectively) of the gear wheel (GW) with respect to the supporting structure (SUP), a driving gear (DG) being drivingly coupled to the drive motor (DM) and to the gear wheel (GW) imparting rotational movement to the gear wheel (GW) from said first to said second position (α1 to α2, respectively) in an active mode of the drive motor (DM), a coiled torsion return spring (RS), which is flexed against its bias at rotational movement of the gear wheel (GW) from the first to the second angular position α1 to α2 in the active mode of the drive motor (DM), and which relaxes in the non-active mode of the drive motor (DM) by urging the gear wheel (GW) to return from the second to the first angular position (α2 to α1, respectively). To avoid damaging peak collision impact when stopping the gear wheel in its return swing at its first angular position α1, the angular motion driving mechanism comprises a flexible end stop being constituted by a member (BT1) structurally fixated to the gear wheel (GW) and in said first position α1 engaging with an first embossement (E1) of said supporting structure (SUP), said member (BT1) being flexed at contact collision with said first embossement (E1).

## Description

The invention relates to an angular motion driving mechanism comprising a gear wheel mounted on a supporting structure for intermittent rotational movement in clockwise and counter-clockwise directions within an arc bounded by first and second angular positions, α1 and α2, respectively, of the gear wheel with respect to the supporting structure, a drive motor carried by the supporting structure having an active mode and an non-active mode, a driving gear being drivingly coupled to the drive motor and to the gear wheel imparting rotational movement to the gear wheel from said first to said second position, α1 to α2, respectively, in an active mode of the drive motor, a coiled torsion return spring, one end thereof being connected to the gear wheel and the other end thereof to the supporting structure, which is flexed against its bias at rotational movement of the gear wheel from the first to the second angular position, α1 to α2, respectively, in the active mode of the drive motor and relaxes in the non-active mode of the drive motor by urging the gear wheel to return from the second to the first angular position α2 to α1, respectively. The use of such angular motion driving mechanisms is known in various applications such as in automatic doorlock systems and throttle valve drivers. Such mechanisms are generally driven by an electric drive motor, which is alternately switched on and off from the non-active mode into the active mode and vice versa for said intermittent rotational movement of the gear wheel in clockwise and counter-clockwise directions.

In the active mode, the motor outputs rotational movement, which is being transferred through the driving gear to the gear wheel and causes bending stress to accumulate in the increasing flexure of the coiled torsion return spring, until the gear wheel reaches its second angular position. When the motor is switched off, the coiled torsion spring releases its bending stress by urging the gear wheel to rotate back in the direction of its first angular position. This rotational return movement is stopped by blocking the gear wheel as soon as it reaches its first angular position. To secure full stop blocking, the gear wheel or a member moving along therewith e.g. by fixation to the gear wheel, is generally made to collide with an element of, or fixated to, the supporting structure at the very moment the gear wheel reaches its first angular position. Dependent on the friction and mass enertia of the gear wheel, the driving gear and the drive motor, on the one hand and the flexure energy of the coiled torsion return spring on the other hand, the impact at contact collision of said member with said element may deform or otherwise damage essential parts of said angular motion driving mechanism, giving rise to early wear and/or malfunctioning of the mechanism.

Now, the present inventors have recognized the particularly damaging effect of impact energy, released at sudden full stop of the gear wheel in the first position.

In consequence, amongst other things, it is an object of the present invention to present an angular motion driving mechanism providing appropriate collision shock absorption at the sudden full stop of the spring driven rotational movement of the gear wheel in its first position, which can be implemented cost effectively.

Therefore, an angular motion driving mechanism according to the invention is being characterized by a flexible end stop being constituted by a first member structurally fixated to the gear wheel and in said first position α1 engaging with a first embossement of said supporting structure to block rotational movement of the gear wheel by said coiled torsion return spring, said first member being flexed at contact collision with said first embossement.

The invention provides for a simple implementation of the end stop, whereas the collision energy is being absorbed by the flexibility of the member therewith avoiding damaging peaking collision impact from occurring.

The invention also relates to a gear wheel for use in an angular motion driving mechanism as defined hereabove.

A gear wheel according to the invention allowing easy and cost effective implementation is characterised by said gear wheel being constituted of flexible material and said first member being an integral part of said gear wheel. This avoids the need for an extra flexible element to provide the function of said first member and allows to choose non-flexible material, such as aluminium, for the supporting structure. Such supporting structure may form part of a housing enclosing the angular motion driving mechanism as a whole.

A further simplification in the implementation of such gear wheel according to the invention, while obtaining robustness against breaking or rupture damages is characterised by said first member being constituted by a first blocking tooth integrally formed in the gear wheel by an incision of a first slit, having a width chosen to absorb shocks at said contact collision without exceeding the breaking limit of the first blocking tooth. The width of the first slit is therefore chosen to appropriately limit tangential movement of said first blocking tooth.

To increase the flexible length of the first blocking tooth, the first blocking tooth is being integrally formed in the gear wheel by said first slit and a second slit. Said second slit is used to obtain an appropriate flexibility of the first blocking tooth.

To accommodate rebound swinging movements of the first blocking tooth also at peaking collision impact, while securing appropriate stability of said first blocking tooth, said first and second slits each have a width increasing in radial direction towards the rotation axis of the gear wheel.

To prevent tearing at the foot end of the first blocking tooth from occurring, said first and second slits each end into a cavity having a radius being substantially larger than the width of the slits.

Another preferred embodiment of a gear wheel according to the invention is characterised by the arc between said first and second angular positions covering a gear tooth segment of substantially 180° being separated from said first blocking tooth by said first slit.

Such gear wheel may preferably have a circumferential radius within said arc which is substantially equal to the radial length of the first blocking tooth and larger than the circumferential radius of the remaining part of said gear wheel.

According to another aspect of the invention, the use of a gear tooth segment covering an arc wider than 180° being separated from said first blocking tooth by said first slit and defining an arc of equal magnitude between the first and second angular positions (α1 and α2) of the gear wheel is made possible by choosing the radial length of the first blocking tooth to be larger than the radius of the gear wheel.

A preferred embodiment of a gear wheel according to the invention providing robust support to the coiled torsion return spring is characterised by an axially cylindrical rim integrally structured with the gear wheel and extending at the rear side thereof being provided with an opening towards the first blocking tooth.

Another preferred embodiment of a gear wheel according to the invention providing appropriate collision shock absorption at the sudden full stop of the spring as well as the motor driven rotational movement of the gear wheel in both first and second angular positions, is characterised by a structure, which is symmetrical with respect to a centre axis, having a second flexible end stop being constituted by a second member, which is located symmetrically to said first member and in said second position α2 engaging with a second embossement of said supporting structure to block rotational movement of the gear wheel by said drive motor, said second member being flexed at contact collision with said second embossement in the active mode of the drive motor.

Preferably, the radial length of the first blocking tooth differs from the radius of the remaining part of said gear wheel by at least part of the radial length of said first embossement.

These and further aspects and advantages of the invention will be discussed more in detail hereinafter with reference to the disclosure of preferred embodiments, and in particular with reference to the appended Figures that show:
- Figure 1,: a top view of a preferred embodiment of an angular motion driving mechanism according to the invention;
- Figure 2A,: a top view of a practical implementation of the angular motion driving mechanism of Figure 1 without drive gear;
- Figure 2B,: a sectional view of the first blocking tooth of as part of the gear wheel in the angular motion driving mechanism of Figure 1;
- Figure 3,: a top view of the practical implementation of the angular motion driving mechanism of Figure 2A with complete gearing;
- Figure 4,: a perspective front view of the gear wheel in the angular motion driving mechanism of Figure 1;
- Figure 5,: a perspective rear view of the gear wheel in the angular motion driving mechanism of Figure 1;
- Figure 6,: a front view of the gear wheel for use in an angular motion driving mechanism according to the invention in a structure, which is symmetrical with respect to a centre axis.

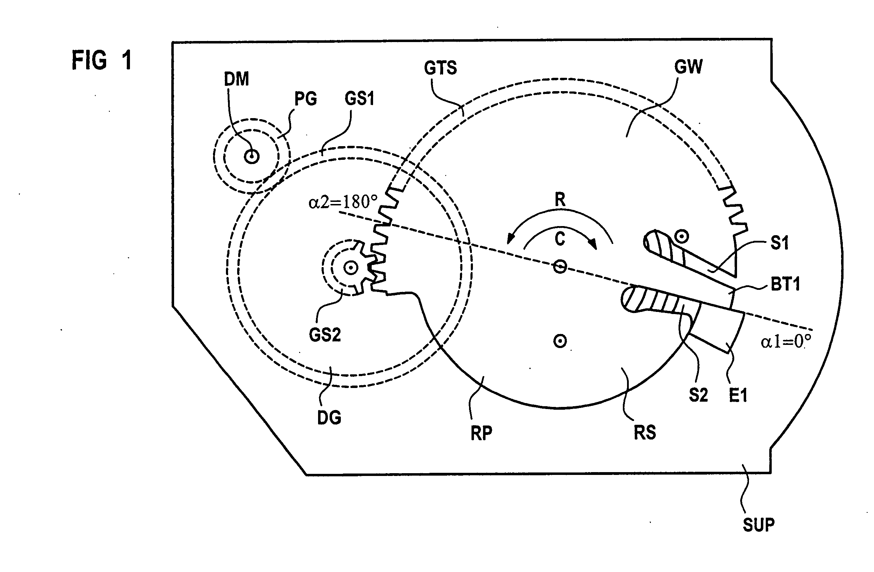

Figure 1 shows a preferred embodiment of an angular motion driving mechanism according to the invention, comprising a gear wheel GW pivotally mounted on a supporting structure SUP for intermittent rotation in clockwise and counter-clockwise directions within an arc bounded by first and second angular positions α1 and α2 of the gear wheel GW with respect to the supporting structure SUP, as indicated with dotted lines provided with reference numerals α1 and α2. In this Figure 1, the gear wheel GW is shown in its first angular position α1. In an active mode, the drive motor DM drivingly rotates a pinion gear PG pivotally mounted on the supporting structure SUP, whereas in an non-active mode the drive motor DM releases the pinion gear PG to allow backward rotation movement. A driving gear DG is drivingly coupled via the pinion gear PG to the drive motor DM on the one hand and to the gear wheel GW on the other hand. The driving gear DG has a first set of gear teeth on an upper level or first gear section GS1 and a second set of gear teeth on a lower level or second gear section GS2 mutually fixated and rotating about a common shaft. The first gear section GS1 has a larger radius than the second gear section GS2 and cooperates with the pinion gear PG to receive driving rotational output from the drive motor DM. The second gear section GS2 is in driving engagement with the gear wheel GW, imparting in an active mode of the drive motor DM rotational movement to the gear wheel GW to drive the same from said first position α1 to said second position α2. A coiled torsion return spring RS is being connected to the gear wheel GW at one end and to the supporting structure SUP at the other end thereof. This spring RS is set to flex against its bias at said rotational movement of the gear wheel GW from said first angular position α1 to said second angular position α2, therewith accumulating bending stress until the gear wheel GW reaches said second position α2. The drive motor DM, when now being switched off, releases its driving engagement with the pinion gear PG, allowing the gear wheel GW to rotate back from the second angular position α2 to said first angular position α1 under bias of the coiled torsion return spring RS. This rotational return movement of the gear wheel GW is stopped as soon as it reaches said first position α1 again by means of a flexible end stop. This flexible end stop is constituted by a first member, hereinafter also being referred to as first blocking tooth BT1, integrally formed in the gear wheel GW by an incision of first and second slits S1 and S2, respectively, colliding with an first embossement E1 of said supporting structure SUP at said first angular position α1 of the gear wheel GW. According to the invention, said first blocking tooth BT1 is being made of flexible material suitable to absorb properly shocks also at maximum peak impact collision of the gear wheel GW against the first embossement E1 Dependent on the flexibility of the first blocking tooth material, the first and second slits S1 and S2, each have a width sufficiently large to accommodate collision caused tangential rebound movements of the first blocking tooth BT1 and sufficiently small to limit tangential movement of said first blocking tooth BT1, such that the first blocking tooth BT1 from breaking or ruptured from the gear wheel GW. The second slit S2 is used to obtain an appropriate flexibly moveable length of the first blocking tooth BT1.

For ease of implementation, the first blocking tooth BT1 forms an integral part of the gear wheel GW, which as a whole is preferably made of suitable flexible material.

To obtain an appropriate compromise between rigidity on the one hand and flexibility on the other hand needed to secure appropriate stability of said first blocking tooth BT1 also at large collision impact, said first and second slits S1 and S2 each have a width increasing in radial direction towards the rotation axis of the gear wheel GW.

Said first and second slits S1 and S2 each end into a cavity having a radius being substantially larger than the width of the slits. This prevents tearing at the foot end of the first blocking tooth BT1 from occurring.

The gear wheel GW as shown is provided with a gear tooth segment GTS covering an arc of substantially 180° being separated from said first blocking tooth BT1 by said first slit S1 and defining an arc of equal magnitude between the first and second angular positions α1 and α2 of the gear wheel GW.

The outer circumferential radius of the gear tooth segment GTS is chosen equal to that of the first blocking tooth BT1, and larger than the circumferential radius of the remaining part RP of said gear wheel GW, allowing for a robust and simple construction of a radial contact surface between the first blocking tooth BT1 and said first embossement E1. The collision forces are directed perpendicular to such contact surface, therewith minimizing deformation of the so obtained end stop means.

In a practical embodiment, the diameter and thickness of the gear wheel GW had been chosen in the order of magnitude of 5,5 centimeter and 0,5 centimeter, respectively, the width of said first and second slits S1 and S2, respectively, in the order of magnitude of 0,7 millimeter, whereas said first embossement E1 and said first blocking tooth BT1 have been designed to share a contact surface area with a radial length and tangential thickness in the order of magnitude of 14 and 6 millimeters, respectively.

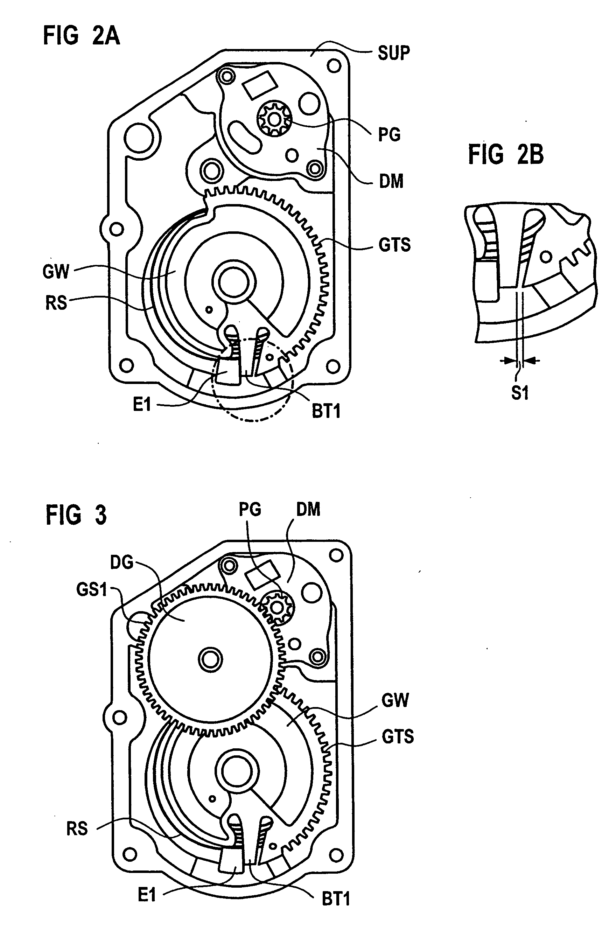

Figure 2A shows a top view of a practical implementation of the angular motion driving mechanism of Figure 1 with the supporting structure SUP including part of the casing or housing of the mechanism, an electric motor as drive motor DM and its pinion gear PG, the gear wheel GW in its first angular position α1 with the first blocking tooth BT1 pressed against the first embossement E1 under bias of the coiled torsion return spring RS. The drive gear DG has been removed for better view on the gear wheel GW.

Figure 2B shows a sectional view of the first blocking tooth BT1 as part of the gear wheel GW in the angular motion driving mechanism of Figure 2A. The width of the first slit S1 at the outer circumference of the gear wheel GW defines the maximum flexure of the first blocking tooth BT1 and as already mentioned above, is chosen sufficiently large to absorb shocks of the first blocking tooth BT1 due to collision with the first embossement E1 and sufficiently small to limit tangential movement of the first blocking tooth BT1 to prevent the same from breaking or tearing off from the gear wheel GW.

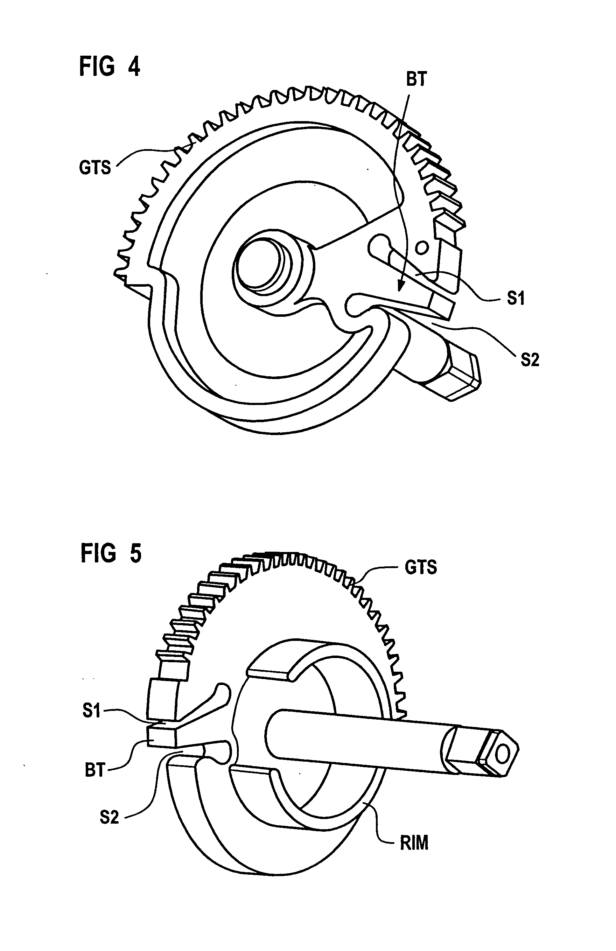

Figure 3 shows a top view of the practical implementation of the angular motion driving mechanism of Figure 2A with complete gearing, i.e. with the driving gear DG of Figure 1 being drivingly coupled to the pinion gear PG of the drive motor DM and to the gear wheel GW imparting rotational movement to the gear wheel GW. Also here the gear wheel is shown in its first angular position α1.

Figure 4 shows a perspective front view of a gear wheel GW according to the invention for use in the angular motion driving mechanism of Figures 1, 2A and 3, which is made of a suitable flexible (e.g. synthetic) material;

Figure 5 shows a perspective rear view of the gear wheel GW of Figure 4 at the rear side having an axially extending cylindrical rim RIM integrally structured with the gear wheel GW to obtain an appropriate rigidity thereof and being provided with an opening towards the first blocking tooth BT to avoid reducing flexibility thereof. The RIM also provides structural support to the coiled torsion return spring RS.

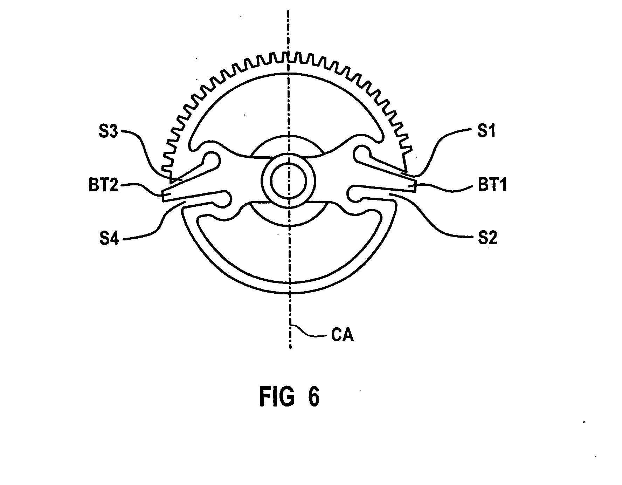

Figure 6 shows a gear wheel for use in an angular motion driving mechanism according to the invention in a structure, which is symmetrical with respect to a centre axis CA. This symmetrical gear wheel GW is being provided with a second blocking tooth BT2 formed by incisions of third and fourth slits S3 and S4 in the gear wheel GW, which with respect to said centre axis CA, is symmetrically structured to the first blocking tooth BT1. This second blocking tooth BT2 is to engage with a second embossement E2 (not shown) structured symmetrically to the first embossement E1 of the supporting structure SUP in the second angular position α2 of the gear wheel GW, providing appropriate collision shock absorption at the collision of said second blocking tooth BT2 with said second embossement E2 in the active mode of the drive motor DM.

In the above, the present invention has been described with reference to a disclosure and drawings that illustrate a preferred embodiment. Persons skilled in the art would however from inspecting thereof recognize various changes and amendments to such preferred embodiment. The invention may well be applied e.g. with a member, which other than the first blocking tooth BT as shown, is constructed by an element separated from the gear wheel GW, but structurally fixated thereto. In such construction, the material of such member may well be different from the material of the gear wheel. Furthermore, the terms clockwise and counterclockwise used above, do not refer to the actual rotational directions of the hands of time clocks and are merely to indicate mutually opposite rotational directions.

Therefore, the disclosure herein should be considered by way of example, rather than by way of restriction, and the due scope of the present invention should be determined from the Claims appended hereto.

## Claims

1. Angular motion driving mechanism comprising:
- a gear wheel (GW) mounted on a supporting structure (SUP) for intermittent rotational movement in clockwise and counter-clockwise directions within an arc bounded by first and second angular positions (α1 and α2, respectively) of the gear wheel (GW) with respect to the supporting structure (SUP);
- a drive motor (DM) carried by the supporting structure (SUP) having an active mode and an non-active mode;
- a driving gear (DG) being drivingly coupled to the drive motor (DM) and to the gear wheel (GW) imparting rotational movement to the gear wheel (GW) from said first to said second position (α1 to α2, respectively) in an active mode of the drive motor (DM);
- a coiled torsion return spring (RS), one end thereof being connected to the gear wheel (GW) and the other end thereof to the supporting structure (SUP), which is flexed against its bias at rotational movement of the gear wheel (GW) from the first to the second angular position α1 to α2, respectively, in the active mode of the drive motor (DM) and relaxes in the non-active mode of the drive motor (DM) by urging the gear wheel (GW) to return from the second to the first angular position (α2 to α1, respectively), **characterized by**
- at least a first flexible end stop being constituted by a first member (BT1) structurally fixated to the gear wheel (GW) and in said first position α1 engaging with a first embossement (E1) of said supporting structure (SUP) to block rotational movement of the gear wheel (GW) by said coiled torsion return spring (RS), said first member (BT1) being flexed at contact collision with said first embossement (E1).

2. Gear wheel (GW) for use in an angular motion driving mechanism according to claim 1, **characterised by** said gear wheel (GW) being constituted of flexible material, said first member (BT1) being an integral part of said gear wheel (GW).

3. Gear wheel (GW) according to claim 2, **characterised by** said first member being constituted by said first member being constituted by a first blocking tooth (BT1) integrally formed in the gear wheel (GW) by an incision of a first slit (S1), having a width chosen to absorb shocks at said contact collision without exceeding the breaking limit of the first blocking tooth (BT1).

4. Gear wheel (GW) according to claim 2 or 3, **characterised by** the first blocking tooth being integrally formed in the gear wheel (GW) by said first slit (S1) and a second slit (S2).

5. Gear wheel (GW) according to claim 4, **characterised by** said first and second slits (S1 and S2, respectively), each have a width increasing radially towards the rotation axis of the gear wheel (GW).

6. Gear wheel (GW) according to claim 5, **characterised by** said first and second slits (S1 and S2, respectively), each ending into a cavity having a radius being substantially larger than the width of the slits S1 and S2.

7. Gear wheel (GW) according to one of claims 4 to 6, **characterised by** a gear tooth segment (GTS) covering an arc of substantially 180° being separated from said first blocking tooth (BT1) by said first slit S1 and defining an arc of equal magnitude between the first and second angular positions (α1 and α2) of the gear wheel (GW).

8. Gear wheel (GW) according to claim 7, **characterised by** the gear wheel (GW) having a circumferential radius within said arc which is substantially equal to the radial length of the first blocking tooth (BT1) and larger than the circumferential radius of the remaining part RP of said gear wheel (GW).

9. Gear wheel (GW) according to one of claims 4 to 6, **characterised by** a gear tooth segment (GTS) covering an arc wider than 180° being separated from said first blocking tooth (BT1) by said first slit (S1) and defining an arc of equal magnitude between the first and second angular positions (α1 and α2) of the gear wheel (GW), the radial length of the first blocking tooth (BT1) being larger than the radius of the gear wheel (GW).

10. Gear wheel (GW) according to claim 8 or 9, **characterised by** the radial length of the first blocking tooth (BT1) differing from the radius of the remaining part (RP) of said gear wheel (GW) by at least part of the radial length of said first embossement (E1).

11. Gear wheel (GW) according to claim one of claims 1 to 10, **characterised by** an axially cylindrical rim (RIM) integrally structured with the gear wheel (GW) and extending at the rear side thereof being provided with an opening towards the first blocking tooth (BT1).

12. Gear wheel (GW) according to one of claims 1 to 11, **characterised by** a structure, which is symmetrical with respect to a centre axis (CA), having a second flexible end stop being constituted by a second member (BT2), which is located symmetrically to said first member (BT1) and in said second position α2 engaging with a second embossement (E2) of said supporting structure (SUP) to block rotational movement of the gear wheel (GW) by said drive motor (DM), said second member (BT2) being flexed at contact collision with said second embossement (E2) in the active mode of the drive motor (DM).

13. Gear wheel (GW) for use in an angular motion driving mechanism according to one of claims 1 to 12, **characterised by** a diameter and thickness of the gear wheel (GW) in the order of magnitude of 5,5 centimeter and 0,5 centimeter, respectively, a width of said first and second slits (S1 and S2) in the order of magnitude of 0,7 millimeter, said first embossement (E1 and said first blocking tooth (BT1) having a common contact surface area with a radial length and tangential thickness in the order of magnitude of 14 and 6 millimeters, respectively.
